# EUROPÄISCHE PATENTSCHRIFT

(11) **EP 3 847 054 B1**
(45) Veröffentlichungstag und Bekanntmachung des Hinweises auf die Patenterteilung: **31.05.2023**
(21) Anmeldenummer: 19765207.6
(22) Anmeldetag: 02.09.2019
(51) Int. Cl.: B60N 2/70, B60R 22/22, B60N 2/60, B60N 2/28, B60R 22/02

(54) **FAHRZEUGSITZ, INSBESONDERE RÜCKSITZBANK MIT EINER GURTSCHLOSSTASCHE**
VEHICLE SEAT, IN PARTICULAR REAR BENCH WITH BELT LOCK POCKET
SIÈGE POUR VÉHICULE, EN PARTICULIER BANQUETTE ARRIÈRE AVEC POCHE DE VERROU DE CEINTURE

(30) Priorität: 03.09.2018 DE 102018214931
(43) Veröffentlichungstag der Anmeldung: 14.07.2021
(73) Patentinhaber: Volkswagen Aktiengesellschaft, 38440 Wolfsburg (DE)
(72) Erfinder: DORST, Vanessa, 38440 Wolfsburg (DE); STEFANI, Nils, 38486 Klötze (DE); KIRST, Philipp, 38126 Braunschweig (DE)
(86) Internationale Anmeldenummer: PCT/EP2019/073299
(87) Internationale Veröffentlichungsnummer: WO 2020/048901

(56) Entgegenhaltungen:
- EP-A1- 0 459 839
- EP-A1- 0 516 512
- US-A- 5 139 311
- US-A1- 2008 211 219
- US-A1- 2009 094 807
- US-A1- 2017 355 286

## Beschreibung

Die Erfindung betrifft einen Fahrzeugsitz, insbesondere eine Rücksitzbank, der/die zwischen Sitzteil und Rückenlehne eine Funktionsleiste aufweist, welche in Normalstellung des Fahrzeugsitzes den Spalt zwischen Sitzteil und Rückenlehne schließt, wobei eine Spiegelfläche der Funktionsleiste im Einbauzustand in einer vertikalen Ebene (y/z-Ebene) angeordnet ist.

Aus der Druckschrift DE 198 53 149 C1 ist ein als Kraftfahrzeug-Rücksitzbank ausgebildeter Fahrzeugsitz bekannt, der ein sich nahezu über die gesamte Fahrzeugbreite erstreckendes Sitzkissen (Fondkissen) und eine an dessen hinterem Rand angeordnete Rückenlehne (Fondlehne) aufweist. Alle Richtungsangaben leiten sich von der gewöhnlichen Fahrtrichtung des Kraftfahrzeuges ab. Die Sitzfläche des Fahrzeugsitzes wird im Wesentlichen durch die Oberseite des Sitzkissens definiert. Die Rückenlehne kann fest angebracht sein, beispielsweise direkt an der Fahrzeugstruktur oder nach vorne klappbar sein, um die Ladefläche zu vergrößern, indem dann die vorliegend als Rückenlehnenfläche bezeichnete Vorderseite der Rückenlehne in Anlage an die Sitzfläche kommt. Die Rückenlehne kann beispielsweise auch im Verhältnis 1/3 zu 2/3 in zwei voneinander unabhängig vorklappbare Teile geteilt sein. Im Anschluss an das Sitzkissen ist entlang dessen hinteren, oberen Rand ein in Fahrzeugquerrichtung verlaufender Polsterriegel angeordnet. Der Polsterriegel ist teilweise unterhalb der Rückenlehne angeordnet und liegt teilweise frei, wobei die Oberseite des Polsterriegels den hintersten Teil der Sitzfläche bildet und sich dabei ohne wesentliche Unebenheiten an die Oberseite des Sitzkissens anschließt. Der Spalt zwischen dem Sitzkissen und der Rückenlehne wird durch den Polsterriegel vollständig geschlossen. Der Polsterriegel weist über seine gesamte Länge einen Träger auf, der vorzugsweise als Kunststoff-Spritzteil ausgebildet ist. Der Träger ist an der Fahrzeugstruktur befestigt. Die Gurtschlösser und der mittlere Beckengurt ragen durch die Aussparungen hindurch und sind an der Fahrzeugstruktur befestigt. In gleicher Weise ist der Träger in den beiden äußeren Bereichen symmetrisch mit Durchlässen für die sogenannten Isofix-Bügel versehen, wobei je ein Paar von Bügeln eine Befestigungsvorrichtung für einen Kindersitz bildet. Der Polsterriegel ist im mittleren Bereich mit einem mittleren Pad oder Polsterstück versehen, welches an dem Träger auf dessen Oberseite befestigt ist und entsprechende Aussparungen für die Gurtschlösser und den mittleren Beckengurt aufweist. Das mittlere Gurtschloss kann für den Nichtgebrauch in eine Vertiefung des Polsterriegels zur Seite geklappt werden.

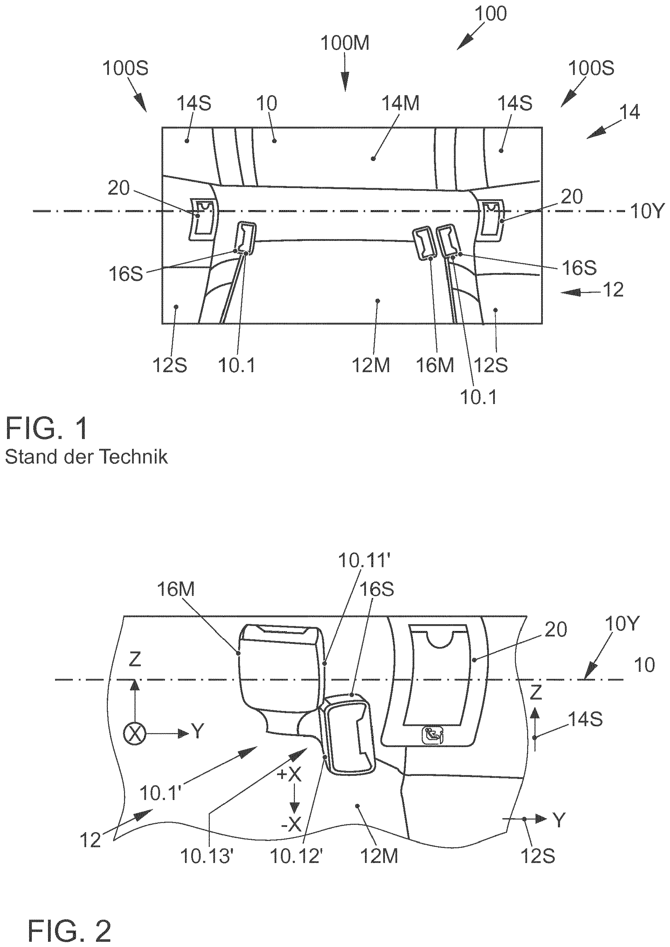

Eine weitere herkömmlicher Lösung wird nachfolgend anhand der Figur 1 erläutert:
- Figur 1: zeigt eine weitere herkömmliche Lösung einer Kraftfahrzeug-Rücksitzbank 100 mit zwei äußeren Fahrzeugsitzen 100S und einem mittleren Fahrzeugsitz 100M zumindest teilweise dargestellt.

In dieser Ausgestaltung ist eine Spiegelfläche des Polsterriegels, der auch als Funktionsleiste 10 bezeichnet wird, im Wesentlichen vertikal und nicht im Wesentlichen horizontal angeordnet.

Dadurch blickt der Betrachter in der Ansicht gemäß Figur 1 von schräg oben auf eine Vorderseite der Funktionsleiste 10. Im Unterschied zur Druckschrift DE 198 53 149 C1 schließt der unterste Teil der gepolsterten Rückenlehne 14; 14S, 14M 14S somit an die Oberseite der gepolsterten Funktionsleiste 10 an und der hinterste Teil des gepolsterten Sitzteiles 12; 12S, 12M 12S schließt im Wesentlichen an einen unteren Bereich der gepolsterten Funktionsleiste 10 an. Mit anderen Worten, die Spiegelfläche der Funktionsleiste 10, die eine zugängliche Anordnung von Komponenten in der Funktionsleiste 10 ermöglicht, liegt im Einbauzustand der Funktionsleiste 10 im Wesentlichen in einer vertikalen Ebene (y/z-Ebene).

Die Funktionsleiste 10 weist gemäß Figur 1 zwei Aussparungen 10.1 auf, wobei die äußeren Gurtschlösser 16S für die äußeren Dreipunkt-Sicherheitsgurte in je eine der beiden Aussparungen 10.1 und ein mittleres Gurtschloss 16M in der in Figur rechts gezeigten Aussparung 10.1 gemeinsam mit einem der äußeren Gurtschlösser 16S in einer Aussparung 10.1 angeordnet ist.

Solche Aussparungen 10.1 werden auch als Gurtschlosstaschen bezeichnet, da in der Aussparung 10.1 in einer Tasche ein oder mehrere Gurtschlösser anordbar ist/sind.

Die Funktionsleiste 10 weist somit im Wesentlichen seitlich eines mittleren Sitzteiles 12M zwei Gurtschlosstaschen 10.1 für zwei Gurtschlösser 16M, 16S auf, wobei je ein äußeres Gurtschloss 16S für die äußeren Dreipunkt-Sicherheitsgurte der äußeren seitlichen Sitzteile 12S und ein mittleres Gurtschloss 16M für einen mittleren Beckengurt des mittleren Sitzteiles 12M, mittels dem auch ein Kindersitz (nicht dargestellt) auf dem mittleren Sitzteil 12M respektive an der mittleren Rückenlehne 14M befestigt werden kann. Es ist gegenüber der DE 198 53 149 C1 neu, dass ein mittleres Gurtschloss 16M und ein äußeres Gurtschloss 16S in einer gemeinsamen Gurtschlosstasche 10.1 in einer vertikal angeordneten Funktionsleiste 10 angeordnet sind. Die Längserstreckung in y-Richtung der vertikal angeordneten Funktionsleiste ist in Figur 1 mit der Achse 10Y gekennzeichnet.

Ergänzend werden die Druckschriften US 5 139 311 A, US 2008/211219 A1, EP 0 459 839 A1, US 2017/355286 A1, US 2009/094807 A1 und EP 0 51 6 51 2 A1 genannt.

Die in diesen Druckschriften offenbarten Anordnungen der jeweiligen Gurtschlösser stellen zusammengefasst den Ausgangspunkt der Erfindung dar.

Angeregt wurde die Erfindung durch eine neue Gesetzesanforderung, welche die Anbindung eines Kindersitzes mittels Gurten (ohne Isofix-Anbindung 20) an oder auf einem Fahrzeugsitz, insbesondere auf einem mittleren Sitzteil 12M respektive an der mittleren Rückenlehne 14M betrifft.

Es wurde analysiert, dass das mittlere Gurtschloss 16M bei der bisherigen Anordnung nicht optimal erreichbar ist, sobald der Kindersitz auf dem mittleren Fahrzeugsitz 100M aufgesetzt ist. Mit anderen Worten, die Erreichbarkeit des Gurtschlosses für den Einbau des Kindersitzes ist verbesserungswürdig, da das mittlere Gurtschloss 16M durch den Kindersitz verdeckt wird.

Darauf wurde mit einem verlängerten, flexiblen Gurtband 16M.1 zwischen Karosserie und Gurtschloss 16M reagiert, mittels dem das (im Ausführungsbeispiel) mittlere Gurtschloss 16M vorzugsweise zusammengeführt mit einem steiferen Gurtband des (im Ausführungsbeispiel) äußeren Gurtschlosses 16S gemeinsam an der Karosserie befestigt werden.

Das verlängerte, flexible Gurtband 16M.1 zwischen Karosserie und mittlerem Gurtschloss 16M führte jedoch dazu, dass das mittlere Gurtschloss 16M als ein Störfaktor für den auf dem mittleren Fahrzeugsitz 100M aufsitzenden Insassen empfunden wurde, da der Aufsitzende sozusagen auf dem mittleren Gurtschloss 16M sitzt. Zudem kommt es zu einem "Klappern" und "Herumfliegen" des mittleren Gurtschlosses 16M, insgesamt somit zu einer zu beseitigenden Komfortbeeinträchtigung.

Der Erfindung liegt nun die Aufgabe zugrunde, die Anordnung eines Gurtschlosses in/an einem Fahrzeugsitz derart zu gestalten, dass die Bedienung des Gurtes und des Gurtschlosses und die Sitzeigenschaften komfortabel sind.

Ausgangspunkt der Erfindung ist ein Fahrzeugsitz 100, insbesondere eine Rücksitzbank, der/die zwischen Sitzteil 12M, 12S und Rückenlehne 14M, 14S eine Funktionsleiste 10 aufweist, welche in Normalstellung des Fahrzeugsitzes 100 den Spalt zwischen Sitzteil 12M, 12S und Rückenlehne 14M, 14S schließt, wobei eine Spiegelfläche der Funktionsleiste 10 im Einbauzustand im Wesentlichen in einer vertikalen Ebene (y/z-Ebene) angeordnet ist.

Es ist vorgesehen, dass in die Funktionsleiste 10 mindestens eine Aussparung 10.1', 10.2` als Gurtschlosstasche zur Aufnahme mindestens eines Gurtschlosses 16M in einer Nichtgebrauchsposition integriert angeordnet ist, welches mit einem flexiblen Gurtband 16M.1 an einer Karosserie beweglich angeordnet ist, wobei das Gurtband 16M.1 dem Schloss des Gurtschlosses 16M in Längserstreckung des Gurtschlosses 16M gesehen gegenüberliegt, wobei die mindestens eine Aussparung 10.1' in einer ersten Ausführungsform zur vertikalen Anordnung des Gurtschlosses 16M in der Spiegelfläche der Funktionsleiste 10` quer zur Längserstreckung 10Y der Funktionsleiste 10` oder in einer anderen zweiten Ausführungsform zur horizontalen Anordnung des Gurtschlosses 16M in der Spiegelfläche der Funktionsleiste 10` in Längserstreckung 10Y der Funktionsleiste 10' ausgebildet ist.

Erfindungsgemäß ist vorgesehen, dass die mindestens eine Aussparung 10.1', 10.2` in einem Schaum der Funktionsleiste 10' ausgebildet ist, wobei die Innenkontur der mindestens einen Aussparung 10.1', 10.2` im Wesentlichen einer Aussenkontur des Gurtschlosses 16M entspricht, wobei die Innenkontur der mindestens einen Aussparung 10.1`, 10.2` mindestens eine Einziehung 10E` aufweist, welche das in der mindestens einen Aussparung 10.1', 10.2` in Nichtgebrauchsposition angeordnete Gurtschlosses 16M in der mindestens einen Aussparung 10.1', 10.2` festklemmt.

Ferner ist bevorzugt vorgesehen, dass die mindestens eine Einziehung 10E` der Innenkontur der mindestens einen Aussparung 10.1', 10.2` aus nach innen stehenden Schaumvorsprüngen ausgebildet ist, die in der mindestens einen Aussparung 10.1', 10.2` ausgebildet sind.

Dabei ist vorgesehen, dass mindestens zwei von insgesamt sechs Seitenwangen 16M-SS (zwei seitliche Seitenwangen, 16M-VS (eine vordere Seitenwange), 16M-HS (ein hintere Seitenwange), 16M-SW (eines schlossseitige Seitenwange), 16M-GW (eines gurtseitige Seitenwange) des Gurtschlosses 16M in Nichtgebrauchsposition in der mindestens einen Innenkontur der mindestens einen Aussparung 10.1', 10.2` kraft- und reibschlüssig klemmen. Die detaillierte Angaben zur kraft- und reibschlüssigen Klemmung folgen in der nachfolgenden Beschreibung.

Dabei ist in weiteren Ausführungsformen, die in der Beschreibung ebenfalls detailliert erläutert sind, vorgesehen, dass die mindestens eine Aussparung 10.1', 10.2` derart vergrößert ausgebildet ist, dass in Nichtgebrauchsposition eine Aufnahme von mehreren Gurtschlössern 16M, 16S gemeinsam in der mindestens einen Aussparung 10.1', 10.2` möglich ist, wobei das eine Gurtschloss 16M nach mindestens einem der Ansprüche 1 bis 3 und das andere Gurtschloss 16S mittels eines steifen Gurtbandes unveränderlich in einer Gebrauchsposition an der Karosserie angeordnet ist, wobei das steife Gurtband des anderen Gurtschlosses 16S dem Schloss in Längserstreckung des Gurtschlosses 16M gesehen gegenüberliegt und in seiner Längserstreckung horizontal quer zur Längserstreckung 10Y der Funktionsleiste 10` ausgerichtet ist und somit in der Gebrauchsposition mit seiner Schlossöffnung von der Funktionsleiste 10' weg zum Sitzteil 12M, 12S des Fahrzeugsitzes (100) gerichtet ist.

In vorteilhafter Weise ist das Gurtschloss 16M mittels des mit einer vorgebbaren Länge versehenen flexiblen Gurtbandes 16M.1 aus der mindestens einen Aussparung 10.1', 10.2` entnehmbar und von der Nichtgebrauchsposition in eine Gebrauchsposition bringbar.

In vorteilhafter Weise liegen in dieser weiteren Ausführungsform das flexible Gurtband 16M.1 und das Gurtschloss 16M in Nichtgebrauchsposition gemeinsam in der mindestens einen Aussparung 10.1', 10.2`.

Es wird darauf hingewiesen, dass die Anordnung des oder der Gurtschlösser 16M, 16S nicht auf die gemäß den Figuren 1 oder 2 gezeigte Anordnung an einem mittleren Fahrzeugsitz 100M beschränkt ist. Die Anordnung des oder der Gurtschlösser 16M, 16S kann an jedem Fahrzeugsitz 100 oder jeder in Fahrzeugsitze geteilten Rücksitzbank in einer dafür geeigneten Position erfolgen, wobei auch die Teilung der Rücksitzbank in mehrere nebeneinander angeordnete Fahrzeugsitze sowie die entsprechende Positionierung des oder der Gurtschlösser 16M, 16S bei unterschiedlichen Teilungsverhältnissen de Rücksitzbank, beispielsweise 1/3 zu 2/3 oder 1/2 zu 1/2 unabhängig von der Erfindung möglich ist.

Für die Zwecke der Beschreibung soll die in Längsrichtung des Fahrzeuges liegende Richtung mit "x" bezeichnet werden. Mit "y" wird die Richtung in der Horizontalen des Fahrzeuges quer zur x-Richtung bezeichnet und mit "z" wird die Richtung in der Vertikalen des Fahrzeuges quer zur x-Richtung bezeichnet. Diese Bezeichnungsweise der Raumrichtungen in kartesischen Koordinaten entspricht dem in der Kraftfahrzeugindustrie allgemein verwendeten Koordinatensystem. Innerhalb aller Figuren werden nachfolgend die gleichen Bezugszeichen für gleiche Bauteile verwendet, wobei gegebenenfalls nicht in jeder Figur erneut alle bereits vorgestellten Bauteile anhand der Bezugszeichen nochmals erläutert werden.

Die Erfindung wird nachfolgend anhand der zugehörigen Zeichnungen erläutert. Es zeigen:
- Figur 2: eine Darstellung einer erfindungsgemäßen Gurtschlosstasche mit Anordnung von zwei Gurtschlössern in der Gurtschlosstasche in einer ersten Ausführungsform;
- Figur 3: eine Prinzipskizze der Anordnung der Gurtschlösser in der Gurtschloss gemäß der ersten Ausführungsform gemäß Figur 2;
- Figur 4A: ein Schnitt A-A durch eine Gurtschlosstasche eines mittleren Gurtschlosses gemäß der Schnittlinie in Figur 3, jedoch ohne das mittlere Gurtschloss;
- Figur 4B: der Schnitt A-A durch die Gurtschlosstasche des mittleren gemäß der Schnittlinie in Figur 3, mit dem mittleren Gurtschloss;
- Figur 5: eine Prinzipskizze einer erfindungsgemäßen Gurtschlosstasche mit Anordnung von zwei Gurtschlössern in der Gurtschlosstasche in einer zweiten Ausführungsform.

Figur 2 zeigt eine Darstellung einer erfindungsgemäßen Gurtschlosstasche 10.1 ` mit Anordnung von zwei Gurtschlössern 16M, 16S in der Gurtschlosstasche 10.1' in einer ersten Ausführungsform.

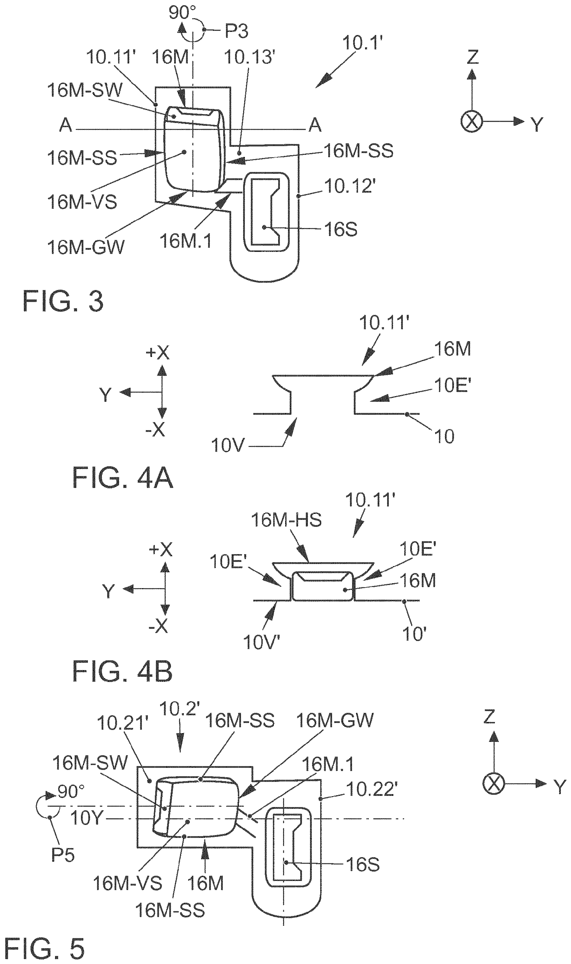

Das mittlere Gurtschloss 16M ist an einem flexiblen Gurtband 16M.1 (prinzipiell dargestellt in den Figuren 3 und 5) angeordnet, so dass in Abhängigkeit der gewählten Länge des flexiblen Gurtbandes 16M.1 eine vorgebbare Bewegungsfreiheit gegeben ist.

Das flexible Gurtband 16M.1 ist zwischen Karosserie und mittlerem Gurtschloss 16M angeordnet und liegt in einer Nische im Schaum der Funktionsleiste 10. Im Zusammenbauzustand sind die Gurtbänder des mittleren Gurtschlosses 16M und des äußeren Gurtschlosses 16S und die Gurtschlösser 16M, 16S von hinten durch eine Öffnung in der erfindungsgemäßen Funktionsleiste 10` und durch eine Öffnung im Schaum auf die Vorderseite der Funktionsleiste10' geführt, die in Figur 1 dargestellt ist.

Erfindungswesentlich ist die Ausgestaltung der "Nische" in dem Schaum der Funktionsleiste 10' und die Anordnung des Gurtschlosses 16M oder der Gurtschlösser 16M und 16S in der Nische, die nachfolgend - wie bereits erläutert - als Gurtschlosstasche 10.1' bezeichnet wird.

In der ersten Ausführungsform ist die Gurtschlosstasche 10.1' in einer Schnittebene betrachtet, die gemäß Figur 2 in der y/z-Ebene liegt, als drei Schenkel aufweisende Stufenaussparung (vergleiche die Strichpunkt-Linie in Figur 2) ausgebildet.

Die erste vertikale Setzstufenaussparung 10.11' bildet die Tasche, das heißt die Nische für das mittlere Gurtschloss 16M und die zweite vertikale Setzstufenaussparung 10.11' bildet die Tasche, das heißt die Nische für das äußere Gurtschloss 16S.

In der dargestellten Ausführungsvariante der ersten Ausführungsform sind die Gurtschlösser 16M, 16S in einer einzigen Gurtschlosstasche 10.1` angeordnet, da die Setzstufenaussparungen 10.11', 10.12' miteinander verbunden sind.

Die Erfindung betrifft somit konfektionierte "Nischen" zur Integration eines oder mehrerer Gurtschlösser 16M, 16S, die bei Nichtgebrauch des Gurtschlosses 16M oder der Gurtschlösser 16M, 16S in der sogenannten Nichtgebrauchsposition in der jeweiligen Nische 10.11', 10.12' angeordnet ist/sind.

In einer zweiten Ausführungsvariante der ersten Ausführungsform (nicht dargestellt) ist die Gurtschlosstasche 10.1' in der Schnittebene betrachtet, die gemäß Figur 2 in der y/z-Ebene liegt, nicht als Stufenaussparung (vergleiche die Strichpunkt-Linie in Figur 2) ausgebildet, da eine Verbindung zwischen der Setzstufenaussparung 10.11' nicht ausgeführt ist, sodass die Aussparungen 10.11', 10.12' ohne Verbindung nebeneinander separat angeordnet sind.

Erfindungsgemäß ist die Aussparung 10.11' der beiden Ausführungsvarianten hinsichtlich ihrer geometrischen Innenkontur derart ausgebildet, dass die Aussparung 10.11' für das mittlere Gurtschloss 16M der Aussenkontur des mittleren Gurtschlosses 16M entspricht, wobei vorgesehen ist, dass das mittlere Gurtschloss 16M in Nichtgebrauchsposition gemäß Figur 2 in seiner Längserstreckung vertikal, das heißt mit seiner Schlossöffnung zur Rückenlehne 14M (nach oben) gerichtet ist.

Mit anderen Worten, die Aussparung 10.11' (vergleiche Figuren 2 und 3) in Höhenrichtung z entspricht im Wesentlichen der Länge des mittleren Gurtschlosses 16M zwischen Gurtband 16M.1 und Schloss des Gurtschlosses 16M in seiner Längserstreckung, während die Aussparung 10.11' in Breitenrichtung y der Breite des Gurtschlosses 16M zwischen den zwei seitlichen Seitenwangen 16M-SS des Gurtschlosses 16M und in Tiefenrichtung x der Dicke des Gurtschlosses 16M zwischen der vorderseitigen Seitenwange 16M-VS und der hinteren Seitenwange 16M-HS (vergleiche Figur 4B) des Gurtschlosses 16M entspricht.

Die seitlichen Seitenwangen 16M-SS des Gurtschlosses 16M sind im Ausführungsbeispiel als Seitenwangen definiert, die in der längeren Längserstreckung des Schlosses (welches in Figur 3 nach oben ausgerichtet ist) einer Schlosswange 16M-SW des Gurtschlosses 16M an das Schloss anschließen. Im Ausführungsbeispiel sind die Seitenwangen 16M-SS schmaler als die jeweilige vorderseitige Seitenwange 16M-VS und die hintere Seitenwange 16M-HS. Der Schlosswange 16M-SW des Gurtschlosses 16M gegenüber liegt die Gurtwange 16M-GW an der das flexible Gurtband 16M.1 befestigt ist.

Erfindungsgemäß ist die Aussparung 10.12` der beiden Ausführungsvarianten der ersten Ausführungsform hinsichtlich ihrer geometrischen Innenkontur derart ausgebildet, dass die Aussparung 10.12` für das seitliche Gurtschloss 16S der Aussenkontur des seitlichen Gurtschlosses 16S entspricht, wobei vorgesehen ist, dass das seitliche Gurtschloss 16S in Gebrauchsposition gemäß Figur 2 in seiner Längserstreckung horizontal quer zur Längserstreckung 10Y der Funktionsleiste 10' angeordnet ist, das heißt mit seiner Schlossöffnung von der Funktionsleiste10' (nach vorn in x-Richtung auf den Betrachter der Figur 2 zu) weg weist.

Mit anderen Worten, die Aussparung 10.12' in Höhenrichtung z entspricht im Wesentlichen der der Breite des Gurtschlosses 16S zwischen den Seitenwangen des Gurtschlosses 16S während die Aussparung 10.12` in Breitenrichtung y der Dicke des Gurtschlosses 16S zwischen der vorderseitigen Seitenwange (ohne Bezugszeichen) und der rückseitigen Seitenwange (ohne Bezugszeichen) des Gurtschlosses 16S und in Tiefenrichtung x im Wesentlichen der halben Länge des mittleren Gurtschlosses 16S zwischen Anbindung des steifen Gurtbandes und Schloss des Gurtschlosses 16S in seiner Längserstreckung (in x-Richtung) entspricht.

Die Figur 3 zeigt in einer Prinzipskizze die Anordnung der Gurtschlösser 16M, 16S gemäß der ersten Ausführungsvariante der in Figur 2 gezeigten ersten Ausführungsform, wobei eine Schnittlinie A-A angetragen ist.

Die Figur 4A zeigt einen Schnitt A-A durch die Gurtschlosstasche 10.11 ` des mittleren Gurtschlosses gemäß der Schnittlinie in Figur 3, jedoch ohne das mittlere Gurtschloss 16M;

Die Figur 4B zeigt den Schnitt A-A durch die Gurtschlosstasche 10.11 ` des mittleren Gurtschlosses gemäß der Schnittlinie in Figur 3, jedoch ohne das mittlere Gurtschloss 16M;

In den Figuren 4A und 4B wird in einer Zusammenschau deutlich, dass die Aussparung 10.11' für das mittlere Gurtschloss 16M nahe der Vorderseite 10V der Funktionsleiste10' eine Einziehung 10E` aufweist, die durch den Schaum der Funktionsleiste 10' ausgebildet ist.

Die Einziehung 10E` bildet eine sogenannte Schaumklammer, die dem mittleren Gurtschloss 16M in Nichtgebrauchsposition in der Gurtschlosstasche 10.11' in vorteilhafter Weise - durch die Reibungskraft zwischen einem Bezugsstoff und dem mittleren Gurtschloss 16M und durch die Presskraft des Schaumes gegenüber dem mittleren Gurtschloss 16M - Halt verleiht.

Die Schaumklammer der Gurtschlosstasche 10.11' weist mindestens zwei oder drei oder vier Schaumanlageflächen auf, welche das Gurtschlosses 16M im Nichtgebrauch kraft- und reibschlüssig klemmen.

Mit anderen Worten, es ist vorgesehen den Schaum der Gurtschlosstasche 10.11' derart zu konfektionierten, dass die "Nische" 10.11` zur Integrierung des Gurtschlosses 16M bei Nichtgebrauch des Gurtschlosses 16M entsteht, wobei der Schaum speziell ausgeformt ist und keine zusätzlichen Hilfsmittel, Hartschaumeinleger oder Unterstützungselemente zur Bildung der Gurtschlosstasche 10.11' notwendig sind.

Wie erläutert, wird durch Auslegung des Bezuges hinsichtlich des Reibungskoeffizienten gegenüber dem Gurtschloss 16M und des Schaumes hinsichtlich der Presskraft dafür gesorgt, dass das Gurtschloss 16M in Nichtgebrauchsposition in der Gurtschlosstasche 10.11` hält. Der Schaum weist die Klammerform mit einem Hinterschnitt, eine sogenannte "Overbuildausformung" auf, wodurch die Klemmwirkung erzeugt wird, sodass das mittlere Gurtschloss 16M insbesondere bei einer Bremsung des Fahrzeuges nicht aus der Position rutschen kann und sich in ungewollter Weise aus der Gurtschlosstasche 10.11' löst. In vorteilhafter Weise führt die Anordnung des Gurtschlosses 16M nicht zu einer Verkleinerung der Komfortfläche des mittleren Sitzteiles 12M des mittleren Fahrzeugsitzes 100M, da das mittlere Gurtschloss 16M in der Gurtschlosstasche 10.11' angeordnet ist, die als neuer Unterbringungsraum für ein Gurtschloss im Allgemeinen geschaffen wurde.

Gemäß einer Zusammenschau der Figuren 3, 4A und 4B (vertikale Anordnung des Gurtschlosses 16M) erfolgt die Klemmung zumindest über die seitlichen Seitenwangen 16M-SS und/oder über die Schlosswange 16M-SW und/oder über die Gurtbandwange 16M-GW. Die vorderseitige Seitenwange 16M-VS und die hintere Seitenwange 16M-HS des Gurtschlosses 16M trägt bei dieser Anordnung nicht zur Klemmung bei.

Gemäß einer Zusammenschau der Figuren 5 und der Figuren 4A und 4B analog (horizontale Anordnung des Gurtschlosses 16M) erfolgt die Klemmung zumindest über die seitlichen Seitenwangen 16M-SS und/oder über die Schlosswange und/oder über die Gurtbandwange. Die vorderseitige Seitenwange 16M-VS und die rückseitige Seitenwange (ohne Bezugszeichen) des Gurtschlosses 16M trägt bei dieser Anordnung ebenfalls nicht zur Klemmung in der Schaumklammer bei.

Dadurch ist die Aufgabe gemäß der ersten oder zweiten Ausführungsvariante der ersten Ausführungsform gelöst, dass das mindestens eine Gurtschloss 16M, 16S, wenn es sich in der Nichtgebrauchsposition befindet, keinen Störfaktor für einen Insassen mehr darstellt und eine Komfortbeeinträchtigung, wie Klappern des Gurtschlosses, Herumfliegen des Gurtschlosses ausgeschlossen ist. Außerdem wirkt der Fahrzeugsitz 100, insbesondere die Kraftfahrzeug-Rücksitzbank 100 wesentlich "aufgeräumter". Die Klammerform des Schaumes in der Funktionsleiste10' beeinträchtigt die Komfortflächen des Fahrzeugsitzes 100 in vorteilhafter Weise ebenfalls nicht.

In Figur 5 ist eine zweite Ausführungsform in einer ersten Ausführungsvariante dargestellt. Figur 5 zeigt in Analogie zur der Prinzipskizze gemäß Figur 3 eine erfindungsgemäße Gurtschlosstasche 10.2` mit Anordnung von zwei Gurtschlössern 16S, 16M in der Gurtschlosstasche 10.2' in einer zweiten Ausführungsform.

Erfindungswesentlich ist die gegenüber der ersten Ausführungsform veränderte Ausgestaltung der "Nische" in dem Schaum der Funktionsleiste 10' und damit die veränderte Anordnung des Gurtschlosses 16M oder der Gurtschlösser 16M und 16S in der veränderten Nische.

In der zweiten Ausführungsform ist die Gurtschlosstasche 10.2' in einer Schnittebene betrachtet, die gemäß Figur 5 in der y/z-Ebene liegt, als zwei Schenkel aufweisende Stufenaussparung (vergleiche die Strichpunkt-Linie in Figur 5) ausgebildet.

Eine horizontale Trittstufenaussparung 10.21` bildet die Tasche, das heißt die Nische für das mittlere Gurtschloss 16M und die gegenüber den Ausführungsvarianten der ersten Ausführungsform unveränderte vertikale Setzstufenaussparung 10.22' bildet die Tasche, das heißt die Nische für das äußere Gurtschloss 16S.

In der dargestellten Ausführungsvariante der zweiten Ausführungsform sind die Gurtschlösser 16M, 16S in einer einzigen Gurtschlosstasche 10.2` angeordnet, da die horizontale Trittstufenaussparung 10.21' und die vertikale Setzstufenaussparungen 10.22' miteinander verbunden sind.

Die Erfindung gemäß der zweiten Ausführungsform betrifft somit ebenfalls eine konfektionierte "Nische" zur Integration eines oder mehrerer Gurtschlösser 16M, 16S, die bei Nichtgebrauch des Gurtschlosses 16M oder der Gurtschlösser 16M, 16S in der sogenannten Nichtgebrauchsposition in der jeweiligen Nische 10.21',10.22' angeordnet ist/sind.

In einer zweiten Ausführungsvariante der zweiten Ausführungsform (nicht dargestellt) ist die Gurtschlosstasche 10.2' in der Schnittebene betrachtet, die gemäß Figur 5 in der y/z-Ebene liegt, nicht als Stufenaussparung (vergleiche die Strichpunkt-Linie in Figur 2) ausgebildet, da erfindungsgemäß keine Verbindung zwischen der horizontalen Trittstufenaussparung 10.21' und der vertikalen Setzstufenaussparung 10.22` ausgeführt ist, sodass die Aussparungen 10.21', 10.22` ohne Verbindung nebeneinander separat angeordnet sind.

Erfindungsgemäß ist die Aussparung 10.21' der beiden Ausführungsvarianten der zweiten Ausführungsform hinsichtlich ihrer geometrischen Innenkontur derart ausgebildet, dass die Aussparung 10.21' für das mittlere Gurtschloss 16M der Aussenkontur des mittleren Gurtschlosses 16M entspricht, wobei vorgesehen ist, dass das mittlere Gurtschloss 16M in Nichtgebrauchsposition gemäß Figur 5 in seiner Längserstreckung horizontalen, das heißt mit seiner Schlossöffnung quer zur Rückenlehne 14M gerichtet ist, wobei Schlossöffnung in Nichtgebrauchsposition in Längserstreckung 10Y der Funktionsleiste 10` zeigt.

Mit anderen Worten, die Aussparung 10.21' (vergleiche Figur 5) in Höhenrichtung z entspricht im Wesentlichen der Breite des Gurtschlosses 16M zwischen den seitlichen Seitenwangen 16M-SS des Gurtschlosses 16M, während die Aussparung 10.21' in Breitenrichtung y der Länge des mittleren Gurtschlosses 16M zwischen Anbindung des flexiblen Gurtbandes 16M.1 und dem Schloss des Gurtschlosses 16M in seiner Längserstreckung (zwischen 16M-SW und 16M-GW und in Tiefenrichtung x der Dicke des Gurtschlosses 16M zwischen der vorderseitigen Seitenwange 16M-VS und der hinteren Seitenwange 16M-HS des Gurtschlosses 16M entspricht.

Analog zu Figur 3 sind die seitlichen Seitenwangen 16M-SS des Gurtschlosses 16M als Seitenwangen definiert, die in der längeren Längserstreckung des Schlosses (welches in Figur 5 nach links ausgerichtet ist) der Schlosswange 16M-SW des Gurtschlosses 16M an das Schloss anschließen. Im Ausführungsbeispiel sind die Seitenwangen 16M-SS schmaler als die jeweilige vorderseitige Seitenwange 16M-VS und die hintere Seitenwange 16M-HS. Der Schlosswange 16M-SW des Gurtschlosses 16M gegenüber liegt die Gurtwange 16M-GW an der das flexible Gurtband 16M.1 befestigt ist.

Erfindungsgemäß ist die Aussparung 10.22' der beiden Ausführungsvarianten der zweiten Ausführungsform hinsichtlich ihrer geometrischen Innenkontur unverändert zu den Ausführungsvarianten der ersten Ausführungsform ausgebildet, das heißt die Aussparung 10.22' für das seitliche Gurtschloss 16S entspricht ebenfalls der Aussenkontur des mittleren Gurtschlosses 16M, wobei vorgesehen ist, dass das seitliche Gurtschloss 16S in Gebrauchsposition gemäß Figur 5 in seiner Längserstreckung horizontal quer zur Längserstreckung 10Y der Funktionsleiste 10' angeordnet ist, das heißt mit seiner Schlossöffnung von der Funktionsleiste10' (nach vorn in x-Richtung auf den Betrachter der Figur 2 zu) weg weist.

Mit anderen Worten, die Aussparung 10.22' in Höhenrichtung z entspricht im Wesentlichen der Breite des Gurtschlosses 16S zwischen den Seitenwangen des Gurtschlosses 16S, während die Aussparung 10.22' in Breitenrichtung y der Dicke des Gurtschlosses 16S zwischen der Vorderseite und der Rückseite des Gurtschlosses 16S und in Tiefenrichtung x im Wesentlichen der halben Länge des mittleren Gurtschlosses 16S zwischen Gurtband und Schloss des Gurtschlosses 16S in seiner Längserstreckung entspricht.

Es wird deutlich, dass auch durch die Lösungen der Ausführungsvarianten der zweiten Ausführungsform die Aufgabe gelöst wird, dass das mindestens eine Gurtschloss in einer Gurtschlosstasche, wenn es sich in Nichtgebrauchsposition befindet, keinen Störfaktor für einen Insassen mehr darstellt und eine Komfortbeeinträchtigung, wie Klappern des Gurtschlosses, Herumfliegen des Gurtschlosses ausgeschlossen ist. Außerdem wirkt der Fahrzeugsitz 100, insbesondere die Kraftfahrzeug-Rücksitzbank 100 wesentlich "aufgeräumter". Die Klammerform des Schaumes in der Funktionsleiste10' beeinträchtigt die Komfortflächen des Fahrzeugsitzes 100 in vorteilhafter Weise ebenfalls nicht.

Es versteht sich, dass die erfindungsgemäße Lösung der Schaumklammer bevorzugt auch für das mittlere Gurtschloss 16M in der Gurtschlosstasche 10.2' der Ausführungsvarianten der zweiten Ausführungsform eingesetzt wird, sodass die beschriebenen vorteilhaften Effekte ebenfalls zum Tragen kommen.

Die erfindungsgemäße Lösung wurde gefunden, indem die Erfinder eine Feinabstimmung zwischen der Position des Gurtschlosses 16M in Nichtgebrauchsposition in der Gurtschlosstasche 10.1', 10.2`, der Berücksichtigung der Dicke und des Reibungskoeffizienten des Bezuges, der Länge des flexiblen Gurtbandes 16M.1, der Schaumkonstruktion zur optimalen Integration des Gurtschlosses 16M vorgenommen haben.

Berücksichtigt wurden als Parameter, der Halt des Gurtschlosses in der Funktionsleiste 10', das sichere Verklemmen in der jeweiligen Gurtschlosstasche 10.1 `, 10.2`, die Zugänglichkeit mithin die Erreichbarkeit für den Benutzer, die aufgeräumte Optik, die Haptik und die Anmutung der Anordnung der Gurtschlosser in der Funktionsleiste 10` insgesamt.

Erfindungsgemäß ist die Position der "Schaumklammer" je nach Ausführungsform sowohl vertikal (ersten Ausführungsform) als auch horizontal (zweite Ausführungsform) in der jeweiligen Gurtschlosstasche 10.1', 10.2` in Abhängigkeit von der Gurtbandlänge 16M.1 im Schaum ausgeführt. Offenbart wird auch eine diagonale Anordnung, bei der die Klammerschenkel diagonal versetzt angeordnet sind, wobei diese diagonale Anordnung in der vertikalen Anordnung (ersten Ausführungsform) als auch der horizontalen Anordnung (zweite Ausführungsform) einsetzbar ist.

Die erfindungsgemäße Lösung ist in vorteilhafter Weise ohne Einlegerahmen, ohne zusätzliche Blenden im Schaum einsetzbar, wodurch eine einfache Umsetzung im Schaum und Bezug möglich ist. Eine Integration eines Einlegerahmens oder von Drähten oder dergleichen in die Schaumumrandung der Gurtschlosstasche 10.1 `, 10.2` ist jedoch, wenn gewünscht, grundsätzlich nicht ausgeschlossen.

Letztlich wird eine weitere (nicht explizit dargestellte) Ausgestaltung beansprucht, die darin besteht, dass das mittlere Gurtschloss 16M ausgehend von den Figuren 3 und 5 um gemäß den Pfeilen P3 (Figur 3) und P5 (Figur 5) um 90° um die vertikale Achse (gemäß Figur 3) oder um die horizontalen Achse (gemäß Figur 5) gedreht angeordnet sein kann.

Es versteht sich, dass die zugehörige Aussparung 10.11' beziehungsweise 10.21' gemäß den vorhergehenden Erläuterungen entsprechend angepasst wird.

Mit anderen Worten, die Aussparung 10.11' (vergleiche Figur 3) entspricht - bei einem um 90° um die vertikale Längserstreckung des Gurtschlosses gedrehten Gurtschloss 16M gemäß Pfeil P3 - in Höhenrichtung z im Wesentlichen der Länge des mittleren Gurtschlosses 16M zwischen Gurtband 16M.1 und Schloss des Gurtschlosses 16M in seiner Längserstreckung, während die Aussparung 10.11 ` in Breitenrichtung y jetzt der Breite des Gurtschlosses 16M zwischen der vorderseitigen Seitenwange 16M-VS und der hinteren Seitenwange 16M-HS des Gurtschlosses 16M und in Tiefenrichtung x der Dicke des Gurtschlosses 16M zwischen den zwei seitlichen Seitenwangen 16M-SS des Gurtschlosses 16M entspricht.

Die Klemmung erfolgt dann zumindest über die vorderseitige Seitenwange 16M-VS und die rückseitige Seitenwange (ohne Bezugszeichen) des Gurtschlosses 16M und/oder über die Schlosswange 16M-SW und/oder über die Gurtbandwange 16M-GW. Die seitlichen Seitenwangen 16M-SS tragen bei einer gegenüber Figur 3 dargestellten Vertikal-Drehung des Gurtschlosses 16M um 90° bei der dadurch erzeugten Position des Gurtschlosses 16M in der Aussparung 10.11` nicht zur Klemmung bei.

Schließlich entspricht die Aussparung 10.21` (vergleiche Figur 5) - bei einem um 90° um die horizontale Längserstreckung des Gurtschlosses 16M gedrehten Gurtschloss 16M gemäß Pfeil P5 - in Höhenrichtung z im Wesentlichen der Länge des mittleren Gurtschlosses 16M zwischen der vorderseitigen Seitenwange 16M-VS und der hinteren Seitenwange 16M-HS. Die Breitenrichtung y der Aussparung 10.11' entspricht dann der Länge zwischen Gurtband 16M.1 und dem Schloss des Gurtschlosses 16M in seiner Längserstreckung, während die Tiefenrichtung x durch den Abstand beziehungsweise der Dicke der zwei seitlichen Seitenwangen 16M-SS des Gurtschlosses 16M definiert ist.

Die Klemmung erfolgt dann zumindest über die vorderseitige Seitenwange 16M-VS und die hintere Seitenwange 16M-HS des Gurtschlosses 16M und/oder über die Schlosswange 16M-SW und/oder über die Gurtbandwange 16M-GW. Die seitlichen Seitenwangen 16M-SS tragen bei einer gegenüber Figur 5 dargestellten Horizontal-Drehung des Gurtschlosses 16M um 90° bei der dadurch erzeugten Position des Gurtschlosses 16M nicht zur Klemmung bei.

### Bezugszeichenliste

- 100: Fahrzeugsitz, Rücksitzbank
- 100S: äußerer Fahrzeugsitz
- 100M: mittlerer Fahrzeugsitz
- 10: Funktionsleiste (Stand der Technik)
- 10.1: Aussparung, Gurtschlosstasche (Stand der Technik)
- 10Y: Längserstreckung der Funktionsleiste 10`
- 10': Funktionsleiste (Erfindung)
- 10V': Vorderseite der Funktionsleiste 10'
- 10E`: Einziehung der Funktionsleiste 10`; Schaumklammer
- 10.1': Aussparung, Gurtschlosstasche in einer ersten Ausführungsform (Erfindung)
- 10.11': vertikale Aussparung
- 10.12`: vertikale Aussparung
- 10.2`: Aussparung, Gurtschlosstasche in einer zweiten Ausführungsform (Erfindung)
- 10.21': horizontale Aussparung
- 10.22': vertikale Aussparung
- 12: Sitzteil
- 12S: äußeres Sitzteil
- 12M: mittleres Sitzteil
- 14: Rückenlehne
- 14S: äußere Rückenlehne
- 14M: mittlere Rückenlehne
- 16: Gurtschloss
- 16S: äußeres Gurtschloss
- 16M: mittleres Gurtschloss
- 16M.1: flexibles Gurtband
- 16M-VS: vordere Seitenwange
- 16M-HS: hintere Seitenwange
- 16M-SS: seitliche Seitenwangen
- 16M-SW: Schlosswange
- 16M-GW: Gurtwange
- 20: Isofix-Anbindung
- x: Längsrichtung eines Fahrzeuges
- -x: Richtung in der üblichen Fahrtrichtung eines Fahrzeugs
- +x: Richtung entgegen der üblichen Fahrtrichtung -x
- y: Richtung in der Horizontalen quer zur x-Richtung
- z: Richtung in der Vertikalen quer zur x-Richtung

## Patentansprüche

1. Fahrzeugsitz (100), insbesondere Rücksitzbank, der/die zwischen Sitzteil (12M, 12S) und Rückenlehne (14M, 14S) eine Funktionsleiste (10) aufweist, welche in Normalstellung des Fahrzeugsitzes den Spalt zwischen Sitzteil (12M, 12S) und Rückenlehne (14M, 14S) schließt, wobei eine Spiegelfläche der Funktionsleiste (10) im Einbauzustand im Wesentlichen in einer vertikalen Ebene (y/z-Ebene) angeordnet ist, wobei in die Funktionsleiste (10) mindestens eine Aussparung (10.1', 10.2') als Gurtschlosstasche zur Aufnahme mindestens eines Gurtschlosses (16M) in einer Nichtgebrauchsposition integriert angeordnet ist, welches mit einem flexiblen Gurtband (16M.1) an einer Karosserie beweglich angeordnet ist, wobei das Gurtband (16M.1) dem Schloss des Gurtschlosses (16M) in Längserstreckung des Gurtschlosses (16M) gesehen gegenüberliegt, wobei
• die mindestens eine Aussparung (10.1') zur vertikalen Anordnung des Gurtschlosses (16M) in der Spiegelfläche der Funktionsleiste (10') quer zur Längserstreckung (10Y) der Funktionsleiste (10`) oder
• die mindestens eine Aussparung (10.2') zur horizontalen Anordnung des Gurtschlosses (16M) in der Spiegelfläche der Funktionsleiste (10`) in Längserstreckung (10Y) der Funktionsleiste (10`) ausgebildet ist,
wobei
die mindestens eine Aussparung (10.1', 10.2') in einem Schaum der Funktionsleiste (10`) ausgebildet ist, wobei die Innenkontur der mindestens einen Aussparung (10.1', 10.2`) im Wesentlichen einer Außenkontur des Gurtschlosses (16M) entspricht, **dadurch gekennzeichnet, dass** die Innenkontur der mindestens einen Aussparung (10.1', 10.2') mindestens eine Einziehung (10E`) aufweist, welche das in der mindestens einen Aussparung (10.1', 10.2') in Nichtgebrauchsposition angeordnete Gurtschloss (16M) in der mindestens einen Aussparung (10.1', 10.2') festklemmt.

2. Fahrzeugsitz (100) nach Anspruch 1, **dadurch gekennzeichnet, dass** die mindestens eine Einziehung (10E`) aus die Innenkontur der mindestens einen Aussparung (10.1', 10.2') nach innen stehenden Schaumvorsprüngen ausgebildet ist, welche die Seitenwangen des Gurtschlosses (16M) in Nichtgebrauchsposition in der mindestens einen Innenkontur der mindestens einen Aussparung (10.1', 10.2') kraft- und reibschlüssig klemmen.

3. Fahrzeugsitz (100) nach Anspruch 2, **dadurch gekennzeichnet, dass** mindestens zwei Schaumvorsprünge ausgebildet sind, welche mindestens zwei Seitenwangen des Gurtschlosses (16M) in Nichtgebrauchsposition in der mindestens einen Innenkontur der mindestens einen Aussparung (10.1', 10.2') kraft- und reibschlüssig klemmen.

4. Fahrzeugsitz (100) nach Anspruch 3, **dadurch gekennzeichnet, dass** drei oder vier Schaumvorsprünge ausgebildet sind, welche mindestens drei oder vier Seitenwangen des Gurtschlosses (16M) in Nichtgebrauchsposition in der mindestens einen Innenkontur der mindestens einen Aussparung (10.1', 10.2') kraft- und reibschlüssig klemmen.

5. Fahrzeugsitz nach Anspruch 1, **dadurch gekennzeichnet, dass** das in Nichtgebrauchsposition vertikal angeordnete Gurtschloss (16M) in der Spiegelfläche der Funktionsleiste (10') quer zur Längserstreckung (10Y) der Funktionsleiste (10`) in einer ersten Nichtgebrauchslage angeordnet ist, in der die Längsachse des Schlosses des Gurtschlosses (16M) in seiner Längserstreckung in horizontaler y-Richtung (y) parallel zur Längserstreckung (10Y) der Funktionsleiste (10`) ausgerichtet ist.

6. Fahrzeugsitz nach Anspruch 1, **dadurch gekennzeichnet, dass** das in Nichtgebrauchsposition vertikal angeordnete Gurtschloss (16M) in der Spiegelfläche der Funktionsleiste (10') quer zur Längserstreckung (10Y) der Funktionsleiste (10`) in einer zweiten Nichtgebrauchslage angeordnet ist, in der die Längsachse des Schlosses des Gurtschlosses (16M) in seiner Längserstreckung in horizontaler x-Richtung (x) quer zur Längserstreckung (10Y) der Funktionsleiste (10`) ausgerichtet ist.

7. Fahrzeugsitz nach Anspruch 1, **dadurch gekennzeichnet, dass** das in Nichtgebrauchsposition horizontal angeordnete Gurtschloss (16M) in der Spiegelfläche der Funktionsleiste (10`) in Längserstreckung (10Y) der Funktionsleiste (10`) in einer ersten Nichtgebrauchslage angeordnet ist, in der die Längsachse des Schlosses des Gurtschlosses (16M) in seiner Längserstreckung in vertikaler z-Richtung (z) quer zur Längserstreckung (10Y) der Funktionsleiste (10`) ausgerichtet ist.

8. Fahrzeugsitz nach Anspruch 1, **dadurch gekennzeichnet, dass** das in Nichtgebrauchsposition horizontal angeordnete Gurtschloss (16M) in der Spiegelfläche der Funktionsleiste (10`) in Längserstreckung (10Y) der Funktionsleiste (10`) in einer zweiten Nichtgebrauchslage angeordnet ist, in der die Längsachse des Schlosses des Gurtschlosses (16M) in seiner Längserstreckung in horizontaler x-Richtung (x) ebenfalls quer zur Längserstreckung (10Y) der Funktionsleiste (10`) ausgerichtet ist.

9. Fahrzeugsitz (100) nach Anspruch 1, **dadurch gekennzeichnet, dass** die mindestens eine Aussparung (10.1', 10.2') derart vergrößert ausgebildet ist, dass in Nichtgebrauchsposition eine Aufnahme von mehreren Gurtschlössern (16M, 16S) gemeinsam in der mindestens eine Aussparung (10.1', 10.2') möglich ist, wobei das eine Gurtschloss (16M) und das andere Gurtschloss (16S) mittels eines steifen Gurtbandes unveränderlich in einer Gebrauchsposition an der Karosserie angeordnet ist, wobei das steife Gurtband des anderen Gurtschlosses (16S) dem Schloss in Längserstreckung des Gurtschlosses (16M) gesehen gegenüberliegt und in seiner Längserstreckung horizontal quer zur Längserstreckung (10Y) der Funktionsleiste (10') ausgerichtet ist und somit in der Gebrauchsposition mit seiner Schlossöffnung von der Funktionsleiste (10') weg zum Sitzteil (12M, 12S) des Fahrzeugsitzes (100) gerichtet ist.

10. Fahrzeugsitz (100) nach mindestens einem der Ansprüche 1 bis 9, **dadurch gekennzeichnet, dass** das Gurtschloss (16M) mittels des flexiblen Gurtbandes (16M.1) aus der mindestens einen Aussparung (10.1', 10.2') entnehmbar und von der Nichtgebrauchsposition in eine Gebrauchsposition bringbar ist.

11. Fahrzeugsitz (100) nach Anspruch 1, **dadurch gekennzeichnet, dass** das flexible Gurtband (16M.1) und das Gurtschloss (16M) in Nichtgebrauchsposition gemeinsam in der mindestens einen Aussparung (10.1', 10.2') angeordnet sind.

## Claims

1. Vehicle seat (100), in particular a rear bench seat, which has a functional strip (10) between a seat part (12M, 12S) and a backrest (14M, 14S), which, in the normal position of the vehicle seat, closes the gap between the seat part (12M, 12S) and the backrest (14M, 14S), wherein a mirror surface of the functional strip (10) is arranged substantially in a vertical plane (y/z plane) in the installed state and at least one recess (10.1', 10.2') is arranged so as to be integrated in the functional strip (10) as a belt buckle pocket for receiving at least one belt buckle (16M) in a non-use position, which belt buckle is arranged movably on a bodywork with a flexible belt strap (16M.1), the belt strap (16M.1) being located opposite the buckle of the belt buckle (16M) when viewed in the longitudinal extension of the belt buckle (16M), wherein
• the at least one recess (10.1') is designed for the vertical arrangement of the belt buckle (16M) in the mirror surface of the functional strip (10') transversely to the longitudinal extension (10Y) of the functional strip (10'), or
• the at least one recess (10.2') is designed for the horizontal arrangement of the belt buckle (16M) in the mirror surface of the functional strip (10') in the longitudinal extension (10Y) of the functional strip (10'),
wherein the at least one recess (10.1', 10.2') is formed in a foam of the functional strip (10'), the inner contour of the at least one recess (10.1', 10.2')
substantially corresponding to an outer contour of the belt buckle (16M),
**characterized in that**
the inner contour of the at least one recess (10.1', 10.2') has at least one narrowed portion (10E') which clamps the belt buckle (16M) arranged in the at least one recess (10.1', 10.2') in the non-use position in the at least one recess (10.1', 10.2').

2. Vehicle seat (100) according to claim 1, **characterized in that** the at least
one narrowed portion (10E') is formed from the inner contour of the at least one recess (10.1', 10.2') inwardly projecting foam projections, which clamp the side faces of the belt buckle (16M) in the non-use position in the at least one inner contour of the at least one recess (10.1', 10.2') in a force-fitting and frictional manner.

3. Vehicle seat (100) according to claim 2, **characterized in that** at least two foam projections are formed which clamp at least two side faces of the belt buckle (16M) in the non-use position in the at least one inner contour of the at least one recess (10.1', 10.2') in a force-fitting and frictional manner.

4. Vehicle seat (100) according to claim 3, **characterized in that** three or four foam projections are formed which clamp at least three or four side faces of the belt buckle (16M) in a non-use position in the at least one inner contour of the at least one recess (10.1', 10.2') in a force-fitting and frictional manner.

5. Vehicle seat according to claim 1, **characterized in that** the belt buckle (16M) arranged vertically in the non-use position is arranged in the mirror surface of the functional strip (10') transversely to the longitudinal extension (10Y) of the functional strip (10') in a first non-use position, in which the longitudinal axis of the buckle of the belt buckle (16M) is oriented in its longitudinal extension in the horizontal y direction (y) in parallel with the longitudinal extension (10Y) of the functional strip (10').

6. Vehicle seat according to claim 1, **characterized in that** the belt buckle (16M) arranged vertically in the non-use position is arranged in the mirror surface of the functional strip (10') transversely to the longitudinal extension (10Y) of the functional strip (10') in a second non-use position, in which the longitudinal axis of the buckle of the belt buckle (16M) is oriented in its longitudinal extension in the horizontal x direction (x) transversely to the longitudinal extension (10Y) of the functional strip (10').

7. Vehicle seat according to claim 1, **characterized in that** the belt buckle (16M) arranged horizontally in the non-use position is arranged in the mirror surface of the functional strip (10') in the longitudinal extension (10Y) of the functional strip (10') in a first non-use position, in which the longitudinal axis of the buckle of the belt buckle (16M) is oriented in its longitudinal extension in the vertical z direction (z) transversely to the longitudinal extension (10Y) of the functional strip (10').

8. Vehicle seat according to claim 1, **characterized in that** the belt buckle (16M) arranged horizontally in the non-use position is arranged in the mirror surface of the functional strip (10') in the longitudinal extension (10Y) of the functional strip (10') in a second non-use position, in which the longitudinal axis of the buckle of the
belt buckle (16M) is also oriented in its longitudinal extension in the horizontal x direction (x) transversely to the longitudinal extension (10Y) of the functional strip (10').

9. Vehicle seat (100) according to claim 1, **characterized in that** the at least one recess (10.1', 10.2') is enlarged such that, in the non-use position, it is possible for a plurality of belt buckles (16M, 16S) to be jointly received in the at least one recess (10.1', 10.2'), the one belt buckle (16M) and the other belt buckle (16S) being arranged in a use position on the bodywork in a fixed manner by means of a rigid belt strap, the rigid belt strap of the other belt buckle (16S) being located opposite the buckle when viewed in the longitudinal extension of the belt buckle (16M) and, in its longitudinal extension, being oriented horizontally transversely to the longitudinal extension (10Y) of the functional strip (10'), and thus, with its buckle opening, being directed away from the functional strip (10') to the seat part (12M, 12S) of the vehicle seat (100) in the use position.

10. Vehicle seat (100) according to any of claims 1 to 9, **characterized in that** the belt buckle (16M) can be removed from the at least one recess (10.1', 10.2') and brought from the non-use position into a use position by means of the flexible belt strap (16M.1).

11. Vehicle seat (100) according to claim 1, **characterized in that** the flexible belt strap (16M.1) and the belt buckle (16M) are jointly arranged in the at least one recess (10.1', 10.2') in the non-use position.

## Revendications

1. Siège de véhicule (100), en particulier banquette arrière, qui présente entre l'assise de siège (12M, 12S)
et le dossier (14M, 14S) une barre fonctionnelle (10), qui en position normale du siège de véhicule ferme la fente entre l'assise de siège (12M, 12S) et le dossier (14M, 14S), dans lequel une surface miroir de la barre fonctionnelle (10) est agencée, à l'état monté, essentiellement dans un plan vertical (plan y/z), dans lequel au moins une encoche (10.1, 10.2') est agencée intégrée dans la barre fonctionnelle (10) en guise de poche pour boucle de ceinture pour la réception d'au moins une boucle de ceinture (16M), dans une position de non-utilisation, qui est agencée mobile avec une sangle flexible (16M.1) sur une carrosserie, dans lequel la sangle (16M.1) est en regard de la boucle de ceinture (16M) observée dans l'étendue longitudinale de la boucle de ceinture (16M), dans lequel
• la au moins une encoche (10.1) est formée pour l'agencement vertical de la boucle de ceinture (16M) dans la surface miroir de la barre fonctionnelle (10') transversalement à l'étendue longitudinale (10Y) de la barre fonctionnelle (10') ou
• la au moins une encoche (10.2) est formée pour l'agencement horizontal de la boucle de ceinture (16M) dans la surface miroir de la barre fonctionnelle (10') selon l'étendue longitudinale (10Y) de la barre fonctionnelle (10'),
dans lequel
la au moins une encoche (10.1', 10.2') est formée dans une mousse de la barre fonctionnelle (10'), dans lequel le contour interne de la au moins une encoche (10.1', 10.2')
correspond essentiellement à un contour externe de la boucle de ceinture (16M), **caractérisé**
**en ce que** le
contour interne de la au moins une encoche (10.1, 10.2') présente au moins un creux (10E'), qui serre dans la au moins une encoche (10.1, 10.2') la boucle de ceinture (16M) agencée dans la au moins une encoche (10.1', 10.7) dans la position de non-utilisation.

2. Siège de véhicule (100) selon la revendication 1, **caractérisé en ce que** le au moins
un creux (10E') est formé à partir de saillies en mousse vers l'intérieur du contour interne de la au moins une encoche (10.1, 10.2'), qui serrent les branches latérales de la boucle de ceinture (16M) dans la position de non-utilisation dans le au moins un contour interne de la au moins une encoche (10.1, 10.2') par complémentarité de forces et par friction.

3. Siège de véhicule (100) selon la revendication 2, **caractérisé en ce qu'**au moins deux saillies en mousse sont formées, qui serrent au moins deux branches latérales de la boucle de ceinture (16M) dans la position de non-utilisation dans l'au moins un contour interne de la au moins une encoche (10.1', 10.2') par complémentarité de forces et par friction.

4. Siège de véhicule (100) selon la revendication 3, **caractérisé en ce que** trois ou quatre saillies en mousse sont formées, qui serrent au moins trois ou quatre branches latérales de la boucle de ceinture (16M) dans la position de non-utilisation dans l'au moins un contour interne de la au moins une encoche (10.1', 10.2') par complémentarité de forces et par friction.

5. Siège de véhicule selon la revendication 1, **caractérisé en ce que** la boucle de ceinture (16M) agencée verticale dans la position de non-utilisation est agencée dans la surface miroir de la barre fonctionnelle (10') transversalement à l'étendue longitudinale (10Y) de la barre fonctionnelle (10') dans un premier état de non-utilisation, dans lequel l'axe longitudinal de la boucle de ceinture (16M) est orienté dans son étendue longitudinale dans la direction y horizontale (y) parallèle à l'étendue longitudinale (10Y) de la barre fonctionnelle (10).

6. Siège de véhicule selon la revendication 1, **caractérisé en ce que** la boucle de ceinture (16M) agencée verticale dans la position de non-utilisation est agencée dans la surface miroir de la barre fonctionnelle (10') transversalement à l'étendue longitudinale (10Y) de la barre fonctionnelle (10') dans un second état de non-utilisation, dans lequel l'axe longitudinal de la boucle de ceinture (16M) est orienté dans son étendue longitudinale dans la direction x horizontale (x) transversalement à l'étendue longitudinale (10Y) de la barre fonctionnelle (10).

7. Siège de véhicule selon la revendication 1, **caractérisé en ce que** la boucle de ceinture (16M) agencée horizontale dans la position de non-utilisation est agencée dans la surface miroir de la barre fonctionnelle (10') dans l'étendue longitudinale (10Y) de la barre fonctionnelle (10') dans un premier état de non-utilisation, dans lequel l'axe longitudinal de la boucle de ceinture (16M) est orienté dans son étendue longitudinale dans la direction z verticale (y) transversalement à l'étendue longitudinale (10Y) de la barre fonctionnelle (10').

8. Siège de véhicule selon la revendication 1, **caractérisé en ce que** la boucle de ceinture (16M) agencée horizontale dans la position de non-utilisation est agencée dans la surface miroir de la barre fonctionnelle (10') dans l'étendue longitudinale (10Y) de la barre fonctionnelle (10') dans un second état de non-utilisation, dans lequel l'axe longitudinal de la boucle
de ceinture (16M) est orienté dans son étendue longitudinale dans la direction x horizontale (x) également transversalement à l'étendue longitudinale (10Y) de la barre fonctionnelle (10').

9. Siège de véhicule (100) selon la revendication 1, **caractérisé en ce que** la au moins une encoche (10.1', 10.2') est formée agrandie de sorte que, dans la position de non-utilisation, une réception de plusieurs boucles de ceinture (16M, 16S) ensemble soit possible dans la au moins une encoche (10.1, 10.2'), dans lequel l'une boucle de ceinture (16M) et l'autre boucle de ceinture (16S) sont agencées au moyen d'une sangle rigide de manière immuable dans une position d'utilisation sur la carrosserie, dans lequel la sangle rigide de l'autre boucle de ceinture (16S) est en regard de la boucle observée dans l'étendue longitudinale de la boucle de ceinture (16M) et est orientée dans son étendue longitudinale à l'horizontale transversalement à l'étendue longitudinale (10Y) de la barre fonctionnelle (10') et ainsi est dirigée dans la position d'utilisation avec son ouverture de boucle à l'écart de la barre fonctionnelle (10') vers l'assise (12M, 12S) du siège de véhicule (100).

10. Siège de véhicule (100) selon au moins l'une des revendications 1 à 9, **caractérisé en ce que** la boucle de ceinture (16M) peut être retirée, au moyen de la sangle flexible (16M.1), de la au moins une encoche (10.1, 10.2') et peut être amenée de la position de non-utilisation dans une position d'utilisation.

11. Siège de véhicule (100) selon la revendication 1, **caractérisé en ce que** la sangle flexible (16M.1) et la boucle de ceinture (16M) sont agencées dans la position de non-utilisation ensemble dans la au moins une encoche (10.1, 10.2').
